# EUROPEAN PATENT APPLICATION

(11) **EP 0 924 931 A2**
(43) Date of publication of application: **23.06.1999**
(21) Application number: 98121723.5
(22) Date of filing: 14.11.1998
(51) Int. Cl.: H04N 7/24

(54) **Improvements in or relating to the information associated with a digital signal**

(30) Priority: 16.12.1997 GB 9726495
(71) Applicant: NDS LIMITED, West Drayton, Middlesex UB7 ODQ (GB)
(72) Inventor: Merry, Paul, Southampton, Hampshire SO40 2LJ (GB)
(74) Representative: Stoakes, Rosemarie Clare

(57) **Abstract**

This invention relates to a method and apparatus for generating service information associated with a service which is transmitted from a transmitter to a receiver via at least one remote transmitter, the apparatus comprising at the or each remote transmitter: a multiplexer for providing a multiplex including material for one or more services and an information packet including information necessary to generate the service information of the or every service; removal means at the or each remote transmitter for removing the information packet from the multiplex; a generator at the or each remote transmitter for generating the service information for the or each service to be transmitted from the remote transmitter; and a combiner at the or each remote transmitter for combining the service information with the or each service in a predetermined manner to form a new multiplex.

## Description

This invention relates to improvements in the handling of information associated with a digital signal, in particular the information associated with a digital broadcast signal.

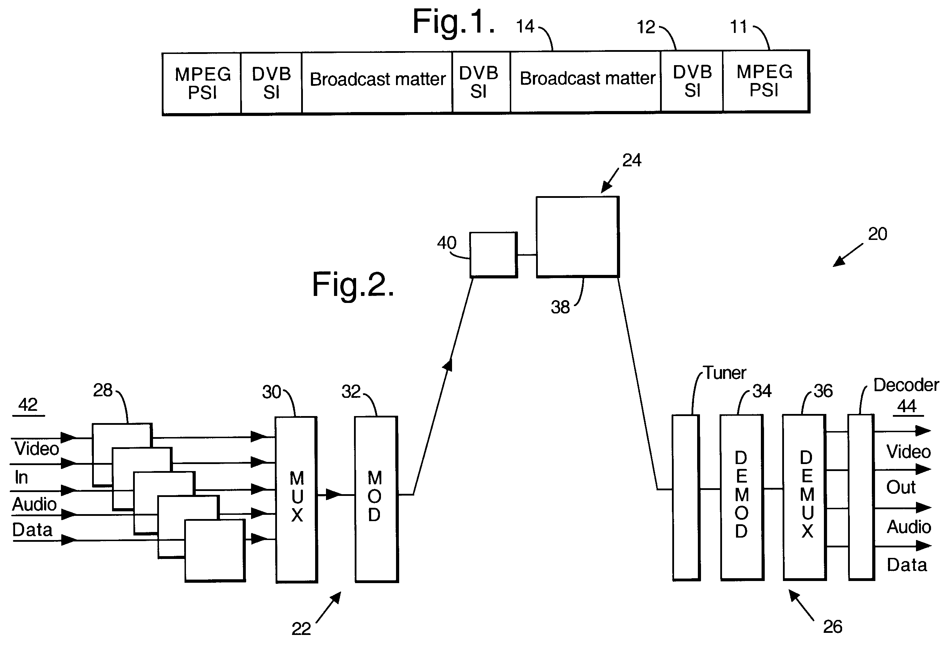

A digital broadcast signal typically includes a multiplex of a number of different packets of information. A typical multiplex is shown in Figure 1. Some of the information will finally make up television, or radio programmes (broadcast matter) and some of the information includes control and identification data associated with specific services or the multiplex in general. In MPEG-2 and DVB compliant systems there is a well defined type of control and identification data, this is known as Program Specific Information (PSI) 11 and Service Information (SI) 12. PSI/SI is repeatedly inserted into a transport stream or multiplex, usually at regular intervals, and contains information which indicates certain features of the broadcast matter 14 and delivery system. It should be noted that the PSI/SI may be relevant to broadcast matter carried on other multiplexes. The types of information included in the PSI/SI may include information relating to the service, its origins, where the service is from, where the service is going to, what frequency the service is transmitted on, etc.

In a MPEG-2 or DVB system the PSI/SI is incorporated into the multiplex at the head end, where individual services or programs are multiplexed together.

If the multiplex is being transmitted directly to the receivers from a single transmitter the PSI/SI will explicitly describe the services and delivery system of the multiplex. However, within a broadcast network it is common for the multiplex to be transmitted via several transmitters simultaneously. Additionally the service content may be modified prior to reaching the final destination. In these circumstances there will be changes required in the transmitted PSI/SI.

There is frequently a need to generate PSI/SI unique to each transmitted multiplex. This requirement arises from the need to be able to uniquely identify the source of a given transmission, from information within the transmitted multiplex. In addition each transmitter within a broadcast network may generate a multiplex containing a unique combination of services derived from a superset of services delivered to all transmitters within the network by some shared distribution system. This results in the need to generate PSI/SI relating only to those services transmitted by a given transmitter rather than all services carried by the distribution multiplex.

There are two known approaches to this problem. However, both have significant drawbacks associated therewith.

The first approach is to generate the transmitter specific multiplex including PSI/SI at a remote location, this requires encoding, scheduling and multiplexing equipment. The transmitter specific multiplex is then delivered to a single specific transmitter over a dedicated point to point distribution circuit.

This approach precludes the use of broadcast or multipoint distribution systems which are a much more efficient means of distributing services from source to transmitter.

The second approach is to utilise an efficient broadcast or multipoint distribution system and to distribute a superset of services and associated SI. At the transmitter site the appropriate services are extracted from the distribution multiplex and passed into the transmitted multiplex. The superset of PSI/SI is in some way locally modified to reflect the unique parameters and services associated with the particular transmitter. This approach has the disadvantage of requiring a complex task to be carried out at a remote and usually unmanned location. It is difficult to monitor the integrity of such a process without an additional infrastructure to do so. Additional problems arise from the fact that the modification process has to be carried out in real time, and any delay introduced by this process introduces a further delay in the period between changes in PSI/SI being generated at source and being seen by the receiving equipment. The nature of DVB PSI/SI is such that significant delays will be introduced by such a PSI/SI modification process.

An additional problem associated with both approaches is that PSI/SI makes inefficient use of bandwidth within a distribution network. PSI/SI is continuously repeated at rates specified by MPEG and DVB and as the majority of data is static for significant periods the bandwidth it occupies is essentially wasted.

Accordingly, one object of the present invention is to provide a technique for generating PSI/SI in a network environment which overcomes at least some of the problems identified in known approaches.

According to one aspect of the present invention there is provided a method of generating service information associated with a service which is transmitted from a transmitter to a receiver via at least one remote transmitter, the method comprising: providing at the or each remote transmitter a multiplex including material for one or more services and an information packet including information necessary to generate the service information of the or every service; removing, at the or each remote transmitter, the information packet from the multiplex; generating from the information packet the service information for the or each service to be transmitted from the or each remote transmitter; and combining the service information with the or each service in a predetermined manner at the or each remote transmitter to form a new multiplex.

This has the advantage of enabling creation of transmitter specific PSI/SI in a broadcast transport stream in a simple and effective manner. Creation of PSI/SI can occur at any transmitter location and does not require large amounts of complex equipment.

According to a second aspect of the present invention there is provided apparatus for generating service information associated with a service which is transmitted from a transmitter to a receiver via at least one remote transmitter, the apparatus comprising:
a multiplexer for providing a multiplex including material for one or more services and an information packet including information necessary to generate the service information of the or every service;
removal means at the or each remote transmitter for removing the information service from the multiplex;
a generator at the or each remote transmitter for generating the service information for the or each mutliplex to be transmitted from the remote transmitter; and
a combiner at the or each remote transmitter for combining the service information with the or each service in a predetermined manner to form a new multiplex.

Reference will now be made by way of example to the accompanying drawings, in which:
Figure 1 is a diagram showing the make up of a typical multiplex;
Figure 2 is a block diagram of a network broadcast system according to one aspect of the present invention;
Figure 3 is a block diagram of a remote PSI/SI inserter shown in Figure 2; and
Figure 4 is a block diagram of a second embodiment of the remote PSI/SI inserter.

Referring to Figure 2 a network broadcast system 20 is shown. The broadcast system includes a distribution head end 22, one or more remote transmitter sites 24 (only one of which is shown) and one or more receivers 26 (only one of which is shown). The head end 22 includes standard elements such as encoders 28, a multiplexer 30 and a modulator 32. The elements necessary to insert or generate PSI/SI may or may not be standard, this will be explained in greater detail below. The receiver 26 includes standard elements such as a demodulator 34, a demultiplexer 36, a tuner and a decoder. The remote transmitter includes a transcoder 38 and a PSI/SI generating module 40.

Audio video and data signals 42 are compressed by each encoder 28. The compressed video signals are then multiplexed together in the multiplexer 30 before being modulated by the modulator 32. The multiplexed signal (also referred to as the multiplex) is then transmitted via a distribution network to one or each of the remote transmission sites. At the remote transmission site the multiplex may be converted and retransmitted or may be merely retransmitted by the transcoder 38. If the multiplex is merely transmitted it may not be necessary to make use of the remote PSI/SI generator 40. However, where there is any change to the multiplex at the remote site the PSI/SI will be changed by the remote PSI/SI generator. This will be described in greater detail below. The retransmitted multiplex is received at one or more of the receivers 26 and demodulated and demultiplexed to produce video, audio and data output 44.

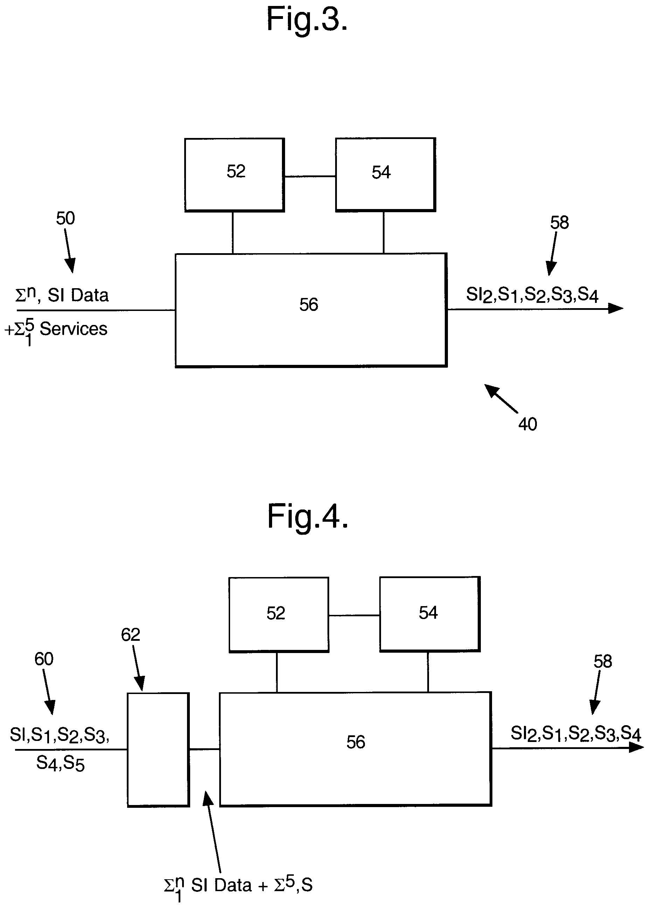

Referring now to Figure 3, the function of the remote PSI/SI generator 40 is now described. In one embodiment of the invention the multiplex is generated without PSI and/or SI. Instead the multiplex includes all the data necessary to generate the PSI and/or SI in a specific stream of data which hereinafter is referred to as PSI/SI Data 50. This PSI/SI data is transmitted along with the broadcast matter to the or each remote transmitter. In the example shown, the input stream 50 includes a multiplex of five services and the output stream 58 includes a multiplex of only four of the five services. The multiplex is passed into the PSI/SI generator 40. The PSI/SI generator 40 includes a first cache 52, a second cache 54 and a PSI/SI inserter 56. In the example shown, the PSI/SI Data 50 includes the data necessary to form the PSI/SI for the multiplex which is to be transmitted by the remote transmitter. In addition to the data for the PSI/SI the PSI/SI Data also includes instructions and rules which the PSI/SI generator can use to determine how and when the PSI/SI may be inserted into the transmitted multiplex.

The whole of the PSI/SI Data 50 is removed from the multiplex. PSI/SI data specific to the transmitter is used to generate the SI. After the PSI/SI has been generated it is transferred to the first cache 52, where it is stored until required for transmission. The stored PSI/SI is then transferred into the second cache 54 at an appropriate time and from here inserted into the output transport stream (or output multiplex) 58 by the PSI/SI inserter. The caches 52 and 54 may be formed of any suitable type of memory device and may include a processor to convert the PSI/SI Data to PSI/SI and to control the insertion of the PSI/SI into the transport stream. It is further possible that a single cache may perform the same function as caches 52 and 54.

PSI/SI Data may be generated at the head end in response to the need to change the PSI/SI being transmitted. The PSI/SI Data is not a continuous stream of real time PSI/SI and carries new PSI/SI tables to be loaded into the cache(s) held in the remote PSI/SI Insertion devices. These tables are delivered to the PSI/SI insertion devices only when a future change in the transmitted PSI/SI is required. Examples of changes, may include updating an event, service or schedule information, or, less frequently, changes to network information resulting from the roll-out of a transmission network, such as may be required for the transmission of digital terrestrial television. Use of this invention ensures that the bandwidth consumed by the PSI/SI Data within the distribution network is minimised. The output of the PSI/SI insertion device is however a continuous real time stream of MPEG/DVB PSI/SI.

The remote PSI/SI inserter 56 at the transmission site which generates PSI/SI maintains the two caches of PSI/SI. PSI/SI is extracted from the second cache 54 and inserted into the transmitted multiplex only when it is appropriate to do so. This may be indicated by a 'time to transmit' parameter associated with the PSI/SI tables held in the first cache. This mechanism allows the PSI/SI Data to be delivered over the distribution network in non real time in advance of the required transmission time. This technique gives a further means for minimising the bandwidth used by PSI/SI data within the distribution multiplex by 'trickle feeding' PSI/SI data for some extended period in advance of its required transmission time.

Each remote PSI/SI inserter is uniquely addressable. The PSI/SI data specific to a given PSI/SI inserter is identified by a PSI/SI inserter address carried along with the data. The PSI/SI data is carried within the distribution network as a single data service comprising data for many or all PSI/SI inserters. PSI/SI data addressed to a specific PSI/SI inserter is filtered from the data service, and data addressed to all other inserters is disregarded. As any data service has an associated overhead the technique of aggregating all the data into single service increases the overall efficiency of the system. In addition, multiple PSI/SI inserters may access common PSI/SI data without the need to repeat the information. This is done by allocating the same address to multiple inserters. The technique facilitates the use of multicast or broadcast addresses being used for PSI/SI data being delivered to several or all PSI/SI inserters. This gives an efficient means of delivering PSI/SI which is common to many PSI/SI inserters. Another benefit is that the PSI/SI being generated at any remote location may be monitored at any point that has access to the distribution network. This is achieved by setting the address of a 'monitoring' PSI/SI inserter to that of the remote PSI/SI inserter to be monitored. In this way the present and future status of the PSI/SI inserter can be monitored at a location away from the remote transmitter.

In another embodiment of the invention shown in Figure 4 the multiplex transmitted from the head end 60 may include the PSI/SI for all the services included therein. If there are to be any changes to the services at a remote transmitter then the PSI/SI can be stripped from the multiplex and a set of PSI/SI Data can be generated in a PSI/SI Data generator 62 located at the remote transmitter. The output from the remote PSI/SI Data generator 62 may then be passed to the PSI/SI generator 56 and the method of changing the PSI/SI proceeds as described above.

A further aspect of the invention is concerned with ensuring that the PSI/SI Data transmitted to the remote transmitter actually arrives at the remote transmitter. Should the data fail to reach the first cache then it will be impossible for the DVB PSI/SI to be used properly at the final destination, such as the receiver. Thus the invention provides a means for ensuring that all PSI/SI Data is available when required. At regular intervals addressed messages are sent to the or each remote transmitter advising the transmitter of what PSI/SI Data is to be sent over a certain time period. The remote transmitter is advised to call the distribution head end if it has not received the PSI/SI Data it is expecting by a certain time. This call is made via a modem and a telephone line (not shown). If any calls are received then the PSI/SI Data that is missing will be resent in good time before it is required.

It should be noted that this invention is of use in any distribution system where there may be a change to the PSI/SI data included in a multiplex. One particular area where the invention is intended is at the remote transmitters used in a digital terrestrial television system. However, it will be evident that the invention has many other uses. It should also be noted that the PSI/SI that may be manipulated by this invention may include DVB PSI/SI or any other type of PSI/SI for proprietary Electronic Program Guide applications.

## Claims

1. A method of generating service information associated with a service which is transmitted from a transmitter to a receiver via at least one remote transmitter, the method comprising:
providing at the or each remote transmitter a multiplex including material for one or more services and an information packet including information necessary to generate the service information for the or every service;
removing, at the or each remote transmitter, the information packet from the multiplex;
generating from the information packet the service information for the or each service to be transmitted from the or each remote transmitter; and
combining the service information with the or each service in a predetermined manner at the or each remote transmitter to form a new multiplex.

2. The method of claim 1, further comprising providing the information packet including service information for the or each service and control and timing information for generating the service information.

3. The method of claim 2, wherein the step of removing the information packet includes storing the service information in a memory and passing the control and timing information to a processor.

4. The method of claim 2 or claim 3, wherein the generating step comprises forming the service information into the required format in dependence on the control and timing information.

5. The method of any of claims 2 to 4, wherein the step of combining the service information with the or each service comprises controlling the combination in dependence on the control and timing information.

6. The method of any preceding claim, further comprising providing the new multiplex having a different number of services than the multiplex.

7. The method of any preceding claim, wherein the step of combining comprises combining the service information with the or each service in accordance with the DVB standard to form the new multiplex.

8. The method of any preceding claim, wherein the step of combining comprises combining the service information with the or each service in accordance with the MPEG standard to form the new multiplex.

9. The method of any preceding claim, further comprising providing the or each service as a broadcast service.

10. Apparatus for generating service information associated with a service that is transmitted from a transmitter to a receiver via at least one remote transmitter, the apparatus comprising:
a multiplexer for providing a multiplex including material for one or more services and an information packet including information necessary to generate the service information of the or every service;
removal means at the or each remote transmitter for removing the information service from the multiplex;
a generator at the or each remote transmitter for generating the service information for the or each service to be transmitted from the remote transmitter; and
a combiner at the or each remote transmitter for combining the service information with the or each service in a predetermined manner to form a new multiplex.

11. The apparatus of claim 10, wherein the information packet includes service information for the or each service and control and timing information for generating the service information.

12. The apparatus of claim 11, wherein the information packet includes service information that is stored in a memory and control and timing information which is passed to a processor.

13. The apparatus of claim 11 or claim 12, wherein the generating step comprises forming the service information into the required format in dependence on the control and timing information.

14. The apparatus of any of claims 11 to 13, wherein the combiner combines the service information with the or each service in dependence on the control and timing information.

15. The apparatus of any of claims 10 to 14, wherein the new multiplex has a different number of services than the multiplex.

16. The apparatus of any or claims 10 to 15, wherein the combiner combines the service information with the or each service in accordance with the DVB standard to form the new multiplex.

17. The apparatus of any or claims 10 to 16, wherein the combiner combines the service information with the or each service in accordance with the MPEG standard to form the new multiplex.

18. The apparatus of any or claims 10 to 17, wherein the or each service is a broadcast service.
